# FASCICULE DE BREVET EUROPEEN

(11) **EP 4 594 119 B1**
(45) Date de publication et mention de la délivrance du brevet: **04.11.2026**
(21) Numéro de dépôt: 23772527.0
(22) Date de dépôt: 22.09.2023
(51) Int. Cl.: B60J 10/84, B60J 5/04

(54) **ENCADREMENT DE PORTE POUR UN VÉHICULE**
TÜRRAHMEN FÜR EIN FAHRZEUG
DOOR FRAME FOR A VEHICLE

(30) Priorité: 26.09.2022 FR 2209728
(43) Date de publication de la demande: 06.08.2025
(73) Titulaire: Renault s.a.s, 92100 Boulogne Billancourt (FR)
(72) Inventeur: GITTON, Alain, 91940 COURTABOEUF (FR); MERCIER, Sébastien, 78280 GUYANCOURT (FR); MOINE-PICARD, Thierry, 78280 GUYANCOURT (FR)
(86) Numéro de dépôt international: PCT/EP2023/076258
(87) Numéro de publication internationale: WO 2024/068476

(56) Documents cités:
- DE-A1- 10 025 925
- DE-U1- 202013 010 333
- FR-A1- 3 048 202
- US-B1- 6 676 193

## Description

L'invention concerne un encadrement de porte pour un véhicule, notamment automobile. L'invention porte aussi sur un agencement comprenant un tel encadrement de porte et un joint d'étanchéité. L'invention porte encore sur un ensemble comprenant un tel agencement et une porte. L'invention porte également sur un véhicule comprenant un tel encadrement de porte et/ou un tel agencement et/ou un tel ensemble.

Dans un véhicule automobile, il apparaît important de pouvoir assurer l'étanchéité des portes du véhicule. Pour cela, le véhicule comprend un joint d'étanchéité annulaire entourant la porte ou entourant un encadrement de porte définissant au moins un plan de côté de caisse sur lequel s'appuie la porte en position fermée. Lorsque la porte est fermée, le joint d'étanchéité est à la fois en contact avec la porte et avec l'encadrement de la porte ce qui empêche l'eau de pénétrer dans l'habitacle. L'encadrement de porte présente une feuillure orientée sensiblement perpendiculairement audit au moins un plan, sur laquelle est monté le joint d'étanchéité. Cette orientation de feuillure de porte définit la direction de début d'ouverture et de fin de fermeture de porte.

Par ailleurs, des véhicules sportifs haut de gamme peuvent être équipés de portes en élytre (en anglais « Scissor doors »). FR 3 048 202 A1 divulgue un encadrement de porte pour un véhicule similaire au préambule de la revendication 1. Outre une cinématique originale d'ouverture vers le haut de telles portes, elles permettent aussi au conducteur de sortir la tête lors des manœuvres en marche arrière sans l'inconvénient d'encombrement d'une porte battante. En effet, la vision arrière sur ce type de véhicule est particulièrement délicate.

On connaît des portes en élytre mobiles entre une position fermée et une position ouverte selon un double mouvement : un premier mouvement de dégagement latéral de la porte et un second mouvement de pivotement de la porte vers le haut. Le premier mouvement permet un basculement du levier pour dégager la porte de ses appuis. Le second mouvement permet une ouverture complète de la porte.

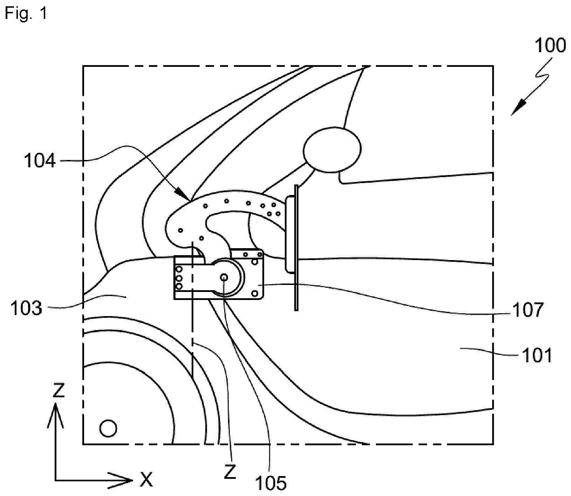

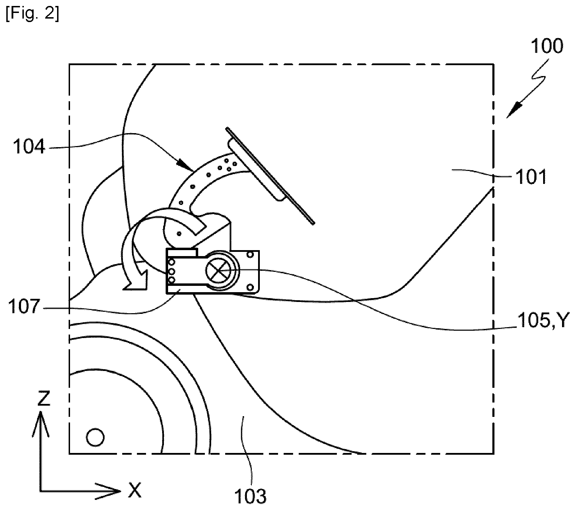

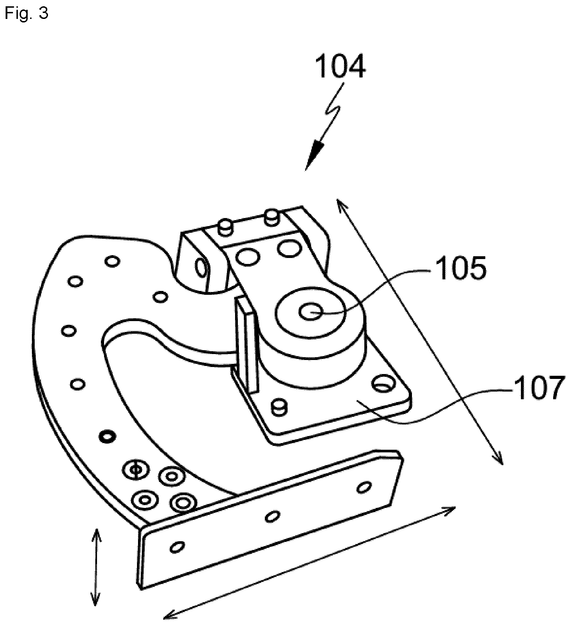

La figure 1 illustre le premier mouvement de dégagement latéral d'une porte 101 d'un véhicule 100, par pivotement selon un axe vertical Z. Sur 5 à 10°, la porte 101 s'ouvre comme une porte battante. La figure 2 illustre le second mouvement de pivotement de la porte 101 vers le haut, selon un axe Y basculé. Sur 120°, la porte 101 pivote vers le haut. La porte 101 est fixée à la caisse 103 via un axe de pivot 105 sur une platine 107 solidaire de la caisse 103. Un exemple d'un système 104 pour réaliser le double mouvement est illustré sur la figure 3.

Toutefois, cette solution présente des inconvénients. En particulier, le système pour réaliser le double mouvement présente un encombrement élevé. En outre, dans le cas d'un mécanisme non motorisé d'ouverture, le double mouvement qu'un utilisateur doit mettre en œuvre pour ouvrir la porte du véhicule n'est pas intuitif, en particulier dans le cas d'un véhicule de location. De plus, le système pour réaliser le double mouvement présente une fragilité dans le cas d'une manœuvre manuelle et impose une structure adaptée et renforcée. En conséquence, une telle cinématique n'est envisageable que si elle est motorisée, permettant une ouverture automatique de la porte lorsqu'un utilisateur appuie sur une commande, ou dans le cadre de démonstrations lors de salons. Or, une motorisation de la commande de porte présenterait une masse trop élevée et un encombrement trop élevé dans le cas de véhicules de faibles dimensions compacts urbains. Par ailleurs, un tel système 104 limite l'ouverture de la porte 101, autour de 45°, ce qui est très en deçà de l'objectif d'accessibilité recherché.

Le but de l'invention est de fournir un encadrement de porte remédiant aux inconvénients ci-dessus et améliorant les dispositifs connus de l'art antérieur. En particulier, l'invention permet de réaliser un dispositif qui soit simple et robuste et durable et qui permet un accès facile à bord d'un véhicule et qui permet de limiter l'encombrement de la porte en position ouverte.

L'invention se rapporte à un encadrement de porte pour un véhicule, notamment automobile, comprenant une feuillure annulaire destinée à coopérer avec un joint d'étanchéité annulaire, le joint d'étanchéité étant destiné à former une étanchéité entre la feuillure et une porte lorsque la porte est dans une position fermée, la feuillure s'étendant dans un plan globalement perpendiculaire à un axe transversal, la feuillure comprenant au moins une portion de transition, notamment du type d'une portion vrillée, configurée de sorte à permettre un échappement du joint lorsque la porte est ouverte depuis sa position fermée par un mouvement de rotation de la porte autour de l' axe de rotation orienté selon l' axe transversal ou sensiblement selon un axe transversal.

L'au moins une portion de transition peut être une vrille en au moins un quart de tour, notamment un demi-tour, de telle sorte que cette portion est d'orientation sensiblement parallèle à l'axe transversal.

La feuillure peut comprendre au moins une zone configurée de sorte à permettre un agencement du joint en retrait ou en saillie par rapport à la feuillure.

La feuillure peut comprendre:
- une première zone configurée de sorte à permettre un agencement d'une première région correspondante du joint selon une orientation perpendiculaire à une direction ayant une composante verticale vers le haut et une composante longitudinale vers l'avant ; et
- une deuxième zone configurée de sorte à permettre un agencement d'une deuxième région correspondante du joint selon une orientation perpendiculaire à une direction longitudinale et vers l'avant ; et
- une troisième zone configurée de sorte à permettre un agencement d'une troisième région correspondante du joint selon une orientation perpendiculaire à une direction ayant une composante longitudinale vers l'avant et une composante verticale vers le haut ; et
- une quatrième zone configurée de sorte à permettre un agencement d'une quatrième région correspondante du joint selon une orientation perpendiculaire à une direction verticale et vers le haut ; et
- une cinquième zone configurée de sorte à permettre un agencement d'une cinquième région correspondante du joint selon une orientation perpendiculaire à une direction ayant une composante longitudinale vers l'arrière et une composante verticale vers le haut.

Une première portion de transition de la feuillure peut s'étendre entre la cinquième zone et la première zone de la feuillure, notamment via un basculement selon l'axe transversal, de telle sorte que cette portion est d'orientation sensiblement parallèle à l'axe transversal. Une deuxième portion de transition de la feuillure peut s'étendre entre la première zone et la deuxième zone de la feuillure, notamment via un basculement selon l'axe transversal, de telle sorte que cette portion est d'orientation sensiblement parallèle à l'axe transversal.

La première portion de transition peut être située à proximité dudit axe transversal et/ou la deuxième portion de transition peut être destinée à coopérer avec un coin supérieur arrière d'une porte, ledit axe transversal étant situé à l'avant de la feuillure.

L'invention se rapporte également à un agencement comprenant un encadrement de porte tel que défini précédemment et un joint d'étanchéité, le joint d'étanchéité étant par exemple monté sur la feuillure, notamment chaussé sur la feuillure, et/ou le joint d'étanchéité étant par exemple fixé à la feuillure par au moins un clip de fixation.

L'invention se rapporte également à un ensemble comprenant un agencement tel que défini précédemment et une porte mobile en rotation autour dudit axe transversal.

L'axe de rotation de la porte peut être incliné par rapport audit axe transversal et/ou l'axe de rotation de la porte peut être déporté par rapport à la porte ou par rapport à l'encadrement de porte.

L'invention se rapporte également à un véhicule, notamment un véhicule automobile, comprenant un encadrement de porte tel que défini précédemment et/ou un agencement tel que défini précédemment et/ou un ensemble tel que défini précédemment.

Les dessins annexés représentent, à titre d'exemple, un mode de réalisation d'un encadrement de porte selon l'invention.
La figure 1 représente un premier mouvement de dégagement latéral d'une porte d'un véhicule équipé d'une porte en élytre.
La figure 2 représente un second mouvement de pivotement vers le haut d'une porte d'un véhicule équipé d'une porte en élytre.
La figure 3 représente un système pour réaliser le double mouvement des figures 1 et 2.
La figure 4 représente un repère orthonormé direct xyz classiquement utilisé en conception automobile.
La figure 5 représente un mode de réalisation d'un encadrement de porte.
La figure 6 représente un mode de réalisation d'un joint d'étanchéité.
La figure 7 représente un mode de réalisation d'un agencement comprenant un encadrement de porte et un joint d'étanchéité.
La figure 8 représente un véhicule équipé d'un mode de réalisation d'un agencement comprenant un encadrement de porte et un joint d'étanchéité.
La figure 9 est une section d'un agencement comprenant un encadrement de porte et un joint d'étanchéité.
La figure 10 est une section d'un agencement comprenant un encadrement de porte et un joint d'étanchéité.
La figure 11 est une section d'un agencement comprenant un encadrement de porte et un joint d'étanchéité.
La figure 12 est une section d'un agencement comprenant un encadrement de porte et un joint d'étanchéité.
La figure 13 est une section d'un agencement comprenant un encadrement de porte et un joint d'étanchéité.
La figure 14 est une section d'un agencement comprenant un encadrement de porte et un joint d'étanchéité.
La figure 15 est une section d'un agencement comprenant un encadrement de porte et un joint d'étanchéité.
La figure 16 représente un véhicule équipé d'une porte en élytre, l'axe de rotation de la porte étant incliné vers l'avant ou vers l'arrière par rapport à un axe transversal.
La figure 17 représente un véhicule équipé d'une porte en élytre, l'axe de rotation de la porte étant incliné vers le bas ou vers le haut par rapport à un axe transversal.

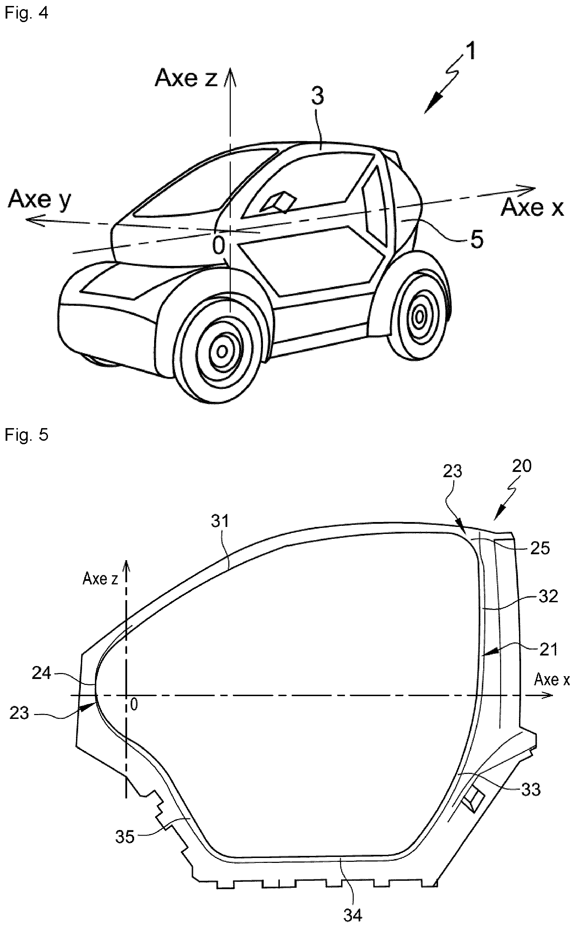

On se référera à un repère orthonormé direct xyz (figure 4), dans lequel l'axe x désigne la direction longitudinale avant-arrière du véhicule, orienté vers l'arrière, l'axe y désigne la direction transversale du véhicule et est orienté de la gauche vers la droite du véhicule, la gauche et la droite étant définies selon le point de vue d'un conducteur du véhicule, l'axe z désigne la direction verticale, et est orienté du bas vers le haut, le véhicule reposant sur un sol horizontal.

Les termes « supérieur » et « inférieur » sont définis en référence à l'axe z. Les termes « avant » et « arrière » sont définis en référence à l'axe x.

L'invention propose d'assurer l'étanchéité d'une porte en élytre. Pour cela, l'invention propose un encadrement de porte comprenant une feuillure annulaire destinée à coopérer avec un joint d'étanchéité annulaire, le joint d'étanchéité étant destiné à former une étanchéité entre la feuillure et une porte lorsque la porte est dans une position fermée, la surface d'appui du joint d'étanchéité étant configurée de sorte à être compatible avec la cinématique d'une porte en élytre tout en évitant les frottements et les cisaillements lors des manœuvres.

L'invention propose un ensemble comprenant un agencement comprenant un encadrement de porte et un joint d'étanchéité et une porte en élytre apte à s'ouvrir selon un mouvement unique de rotation.

Les difficultés techniques que la Demanderesse a été amenée à lever pour développer un tel ensemble sont notamment la découpe de la porte et sa cinématique, notamment pour :
- assurer l'accès à bord ;
- limiter l'encombrement de la porte en position ouverte ;
- assurer la durabilité et la robustesse de l'ensemble, notamment à cause des risques de vandalisme, par exemple pour un véhicule en location ;
- proposer un tracé ou profil du joint d'étanchéité qui assure l'étanchéité en lien avec la cinématique de la porte afin de limiter les frottements en manœuvre ;
- assurer les fonctions des mécanismes et de la commande d'ouverture et de fermeture de la porte.

La cinématique de la porte et l'étanchéité sont deux fonctions imbriquées que la Demanderesse a construites en parallèle, par application des règles établies de conception.

Un exemple d'un véhicule 1 équipé d'un ouvrant 3, notamment d'une porte 3, par exemple en élytre, est décrit ci-après en référence à la figure 4.

La référence O désigne le centre de rotation de la porte 3.

L'axe de rotation de la porte peut être orienté selon l'axe transversal y.

L'invention propose un encadrement de porte 20 comprenant une feuillure 21 annulaire destinée à coopérer avec un joint d'étanchéité 50 annulaire, la feuillure 21 étant configurée pour permettre un dégagement entre une porte 3 et une caisse 5 lors de manœuvres d'ouverture et de fermeture de la porte 3, tout en limitant les frottements de la porte 3 sur le joint 50.

Un mode de réalisation d'un encadrement de porte 20 pour un véhicule 1, notamment automobile, est décrit ci-après en référence à la figure 5. La description qui suit correspond au cas d'une porte latérale gauche. L'invention pourra bien entendu s'appliquer à une porte latérale droite.

L'encadrement de porte 20 est par exemple destiné à être solidaire d'une caisse 5 d'un véhicule 1.

L'encadrement de porte 20 comprend une feuillure annulaire 21.

La feuillure annulaire 21 est destinée à coopérer avec un joint d'étanchéité annulaire 50.

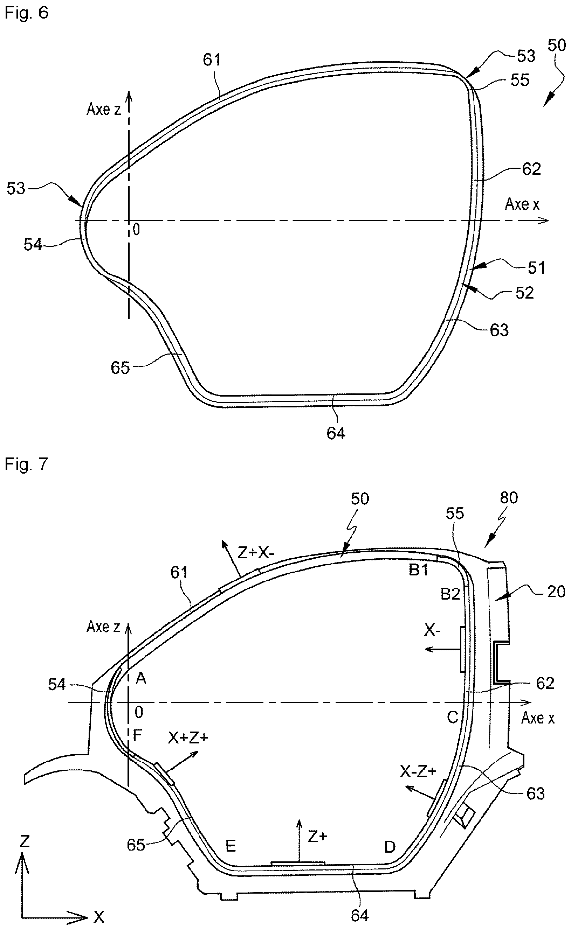

Un mode de réalisation d'un joint d'étanchéité annulaire 50 sera décrit ci-après en référence à la figure 6. Le joint d'étanchéité 50 est destiné à former une étanchéité entre la feuillure 21 et une porte 3 lorsque la porte 3 est dans une position fermée.

Le joint 50 peut être fixé sur une porte 3 ou sur une caisse 5 d'un véhicule 1.

Dans le cas où le joint 50 est fixé sur une caisse 5, la feuillure annulaire 21 est destinée à coopérer avec un joint 50 par fixation du joint 50.

Dans le cas où le joint 50 est fixé sur une porte 3, la feuillure annulaire 21 est destinée à coopérer avec un joint 50 par un appui du joint 50.

La feuillure 21 s'étend dans un plan globalement perpendiculaire à un axe transversal y.

La feuillure 21 comprend au moins une portion de transition 23.

L'au moins une portion de transition 23 est configurée de sorte à permettre un échappement du joint 50 lorsque la porte 3 est ouverte depuis sa position fermée par un mouvement de rotation de la porte autour d'un axe de rotation orienté selon un axe transversal y ou sensiblement selon un axe transversal y.

Par « échappement », on entend un décollement de la porte 3 par rapport à l'encadrement de porte 20 sans frottement ou avec un frottement minimal.

Avantageusement, la porte 3 est mobile entre une position fermée et une position ouverte selon un mouvement de rotation unique. La porte 3 est notamment mobile en liaison pivot autour de l'axe transversal y. Le mouvement de la porte 3 est réalisé selon un seul degré de liberté en rotation autour de l'axe y. Le mouvement de la porte 3 ne comprend pas de rotation selon l'axe z ou selon l'axe x, ni de translation.

L'au moins une portion de transition 23 est par exemple une portion vrillée en quart de tour. La feuillure 21 est ainsi d'orientations évolutives par l'intermédiaire d'au moins une portion de transition reliant des première et seconde portions adjacentes à la portion de transition. La première portion adjacente est d'orientation différente à celle de la seconde portion adjacente.

La feuillure 21 peut être en un matériau plastique ou en un matériau métallique ou en tout autre matériau.

La feuillure 21 peut comprendre au moins une zone 31, 32, 33, 34, 35 configurée de sorte à permettre un agencement du joint 50 en retrait ou en saillie par rapport à la feuillure 21.

La feuillure 21 peut comprendre une première zone 31 (A-B1) configurée de sorte à permettre un agencement d'une première région 61 correspondante du joint 50 selon une orientation perpendiculaire à une direction (Z+X-) ayant une composante verticale vers le haut et une composante longitudinale vers l'avant.

Le joint 50 peut comprendre une base 51 et un bulbe 52. Le bulbe 52 est destiné à être écrasé lorsque la porte 3 passe d'une position ouverte à la position fermée. Le bulbe 52 reste en compression une fois la porte 3 fermée. Le joint 50 est destiné à être agencé de sorte que le bulbe 52 soit du côté de la porte 3. La base 51 du joint 50 est destinée à être fixée sur une porte 3 ou sur une caisse 5 d'un véhicule 1.

Par « orientation » du joint 50 ou d'une région du joint, on entend l'orientation du bulbe 52 du joint 50 définie par un plan approximativement tangent au sommet du bulbe 52 en position écrasée. Le joint 50 est notamment destiné à être orienté dans le sens du déplacement pour permettre un échappement du joint 50 lorsque la porte 3 est ouverte depuis sa position fermée par un mouvement de rotation de la porte autour d'un axe de rotation.

La feuillure 21 peut comprendre une deuxième zone 32 (B2-C) configurée de sorte à permettre un agencement d'une deuxième région 62 correspondante du joint 50 selon une orientation perpendiculaire à une direction longitudinale et vers l'avant (X-).

La feuillure 21 peut comprendre une troisième zone 33 (C-D) configurée de sorte à permettre un agencement d'une troisième région 63 correspondante du joint 50 selon une orientation perpendiculaire à une direction (X-Z+) ayant une composante longitudinale vers l'avant et une composante verticale vers le haut.

La feuillure 21 peut comprendre une quatrième zone 34 (D-E) configurée de sorte à permettre un agencement d'une quatrième région 64 correspondante du joint 50 selon une orientation perpendiculaire à une direction verticale et vers le haut (Z+).

La feuillure 21 peut comprendre une cinquième zone 35 (E-F) configurée de sorte à permettre un agencement d'une cinquième région 65 correspondante du joint 50 selon une orientation perpendiculaire à une direction (X+Z+) ayant une composante longitudinale vers l'arrière et une composante verticale vers le haut.

La feuillure 21 peut comprendre une première portion de transition 24 (FA). La première portion de transition 24 peut s'étendre entre la cinquième zone 35 et la première zone 31 de la feuillure 21.

La première portion de transition 24 peut être une zone de transition de la feuillure 21 configurée pour permettre un passage d'une région du joint 50 d'orientation perpendiculaire à une direction (X+Z+) ayant une composante longitudinale vers l'arrière et une composante verticale vers le haut à une région du joint 50 d'orientation perpendiculaire à une direction (Z+X-) ayant une composante verticale vers le haut et une composante longitudinale vers l'avant, notamment via un basculement selon l'axe transversal y.

Par basculement selon l'axe transversal y de la feuillure 21, on entend une zone où la feuillure 21 passe d'un plan d'appui x à un plan d'appui z via une vrille selon laquelle la feuillure 21 passe par un plan d'appui y.

La feuillure 21 peut comprendre une deuxième portion de transition 25 (B1-B2). La deuxième portion de transition 25 peut s'étendre entre la première zone 31 et la deuxième zone 32 de la feuillure 21.

La deuxième portion de transition 25 peut être une zone de transition de la feuillure 21 configurée pour permettre un passage d'une région du joint 50 d'orientation perpendiculaire à une direction (Z+X-) ayant une composante verticale vers le haut et une composante longitudinale vers l'avant à une région du joint 50 d'orientation perpendiculaire à une direction longitudinale et vers l'avant (X-), notamment via un basculement selon l'axe transversal.

L'axe transversal y de rotation de la porte, ainsi que le centre O de rotation de la porte, peut être situé à l'avant de la feuillure 21.

La première portion de transition 24 est par exemple située à proximité dudit axe transversal y autour duquel pivote la porte.

La deuxième portion de transition 25 est par exemple destinée à coopérer avec un coin supérieur arrière d'une porte 3.

Un mode de réalisation d'un joint d'étanchéité annulaire 50 est décrit ci-après en référence à la figure 6.

Le joint d'étanchéité 50 peut être configuré de sorte à épouser le contour de l'encadrement de porte 20.

Avantageusement, le joint d'étanchéité 50 est continu, sous la forme d'une seule pièce.

Le joint 50 peut être directement fabriqué sous forme annulaire, par exemple par moulage ou extrusion.

Le joint d'étanchéité 50 peut être fabriqué à partir d'un matériau élastique tel que du caoutchouc. Le joint d'étanchéité 50 est déformable afin de suivre le profil de la feuillure 21.

La base 51 est destinée à être chaussée sur la feuillure 21, elle présente un profil sensiblement en U pour ce faire. La base 51 peut comprendre une armature métallique afin d'améliorer sa tenue sur la feuillure de porte. La base 51 comprend des lèvres d'étanchéité venant épouser la géométrie de la feuillure 21 de porte sur laquelle le joint 50 est chaussé.

Le joint 50 peut comprendre une première région 61 destinée à être orientée perpendiculairement à une direction (Z+X-) ayant une composante verticale vers le haut et une composante longitudinale vers l'avant.

Le joint 50 peut comprendre une deuxième région 62 destinée à être orientée perpendiculairement à une direction longitudinale et vers l'avant (X-).

Le joint 50 peut comprendre une troisième région 63 destinée à être orientée perpendiculairement à une direction (X-Z+) ayant une composante longitudinale vers l'avant et une composante verticale vers le haut.

Le joint 50 peut comprendre une quatrième région 64 destinée à être orientée perpendiculairement à une direction verticale et vers le haut (Z+).

Le joint 50 peut comprendre une cinquième région 65 destinée à être orientée perpendiculairement à une direction (X+Z+) ayant une composante longitudinale vers l'arrière et une composante verticale vers le haut.

Le joint 50 peut comprendre au moins une région vrillée 53.

Le joint 50 peut comprendre une première région vrillée 54 et une deuxième région vrillée 55.

La première région vrillée 54 peut s'étendre entre la cinquième région 65 et la première région 61 du joint 50.

La deuxième région vrillée 55 peut s'étendre entre la première région 61 et la deuxième région 62 du joint 50.

Un mode de réalisation d'un agencement 80 comprenant un encadrement de porte 20 du type de celui décrit en relation avec la figure 5 et un joint d'étanchéité 50 du type de celui décrit en relation avec la figure 6 est décrit ci-après en référence à la figure 7.

Le joint d'étanchéité 50 est par exemple monté sur la feuillure 21 de l'encadrement de porte 20, notamment chaussé sur la feuillure 21.

En variante, le joint d'étanchéité 50 peut être fixé à la feuillure 21 par au moins un clip de fixation. L'au moins un clip de fixation peut être solidaire du joint d'étanchéité 50.

Le joint 50 travaille alternativement en z, en y et en x, contrairement au cas une porte battante où un joint est principalement selon y. Il en résulte qu'un joint 50 unique continu peut être utilisé dans un tel agencement 80 pour assurer l'étanchéité.

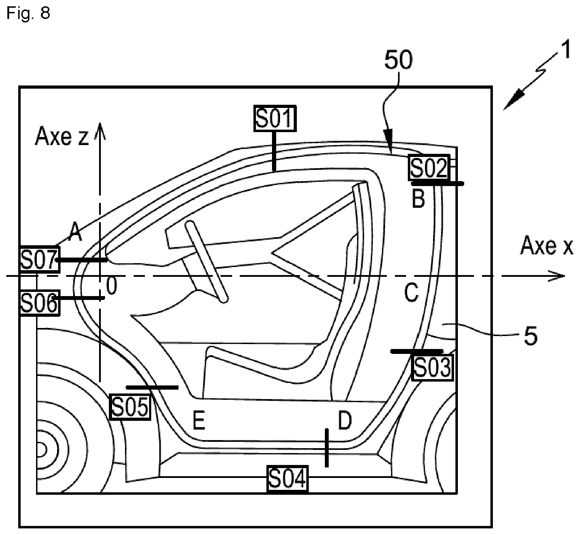

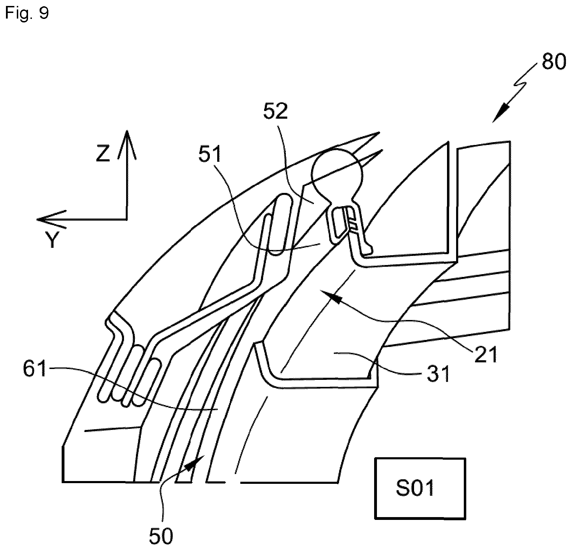

Un exemple d'un véhicule 1 équipé d'un mode de réalisation d'un agencement 80 comprenant un encadrement de porte 20 du type de celui décrit en relation avec la figure 5 et un joint d'étanchéité 50 du type de celui décrit en relation avec la figure 6 est décrit ci-après en référence à la figure 8 et en référence aux figures 9 à 15.

Le véhicule 1 peut être un véhicule automobile, par exemple un véhicule comprenant une porte 3 ayant une cinématique en élytre.

La section S01 (figure 9) correspond à la première zone 31 de la feuillure 21 et à la première région 61 du joint 50. La feuillure 21 est notamment verticale dans la première zone 31.

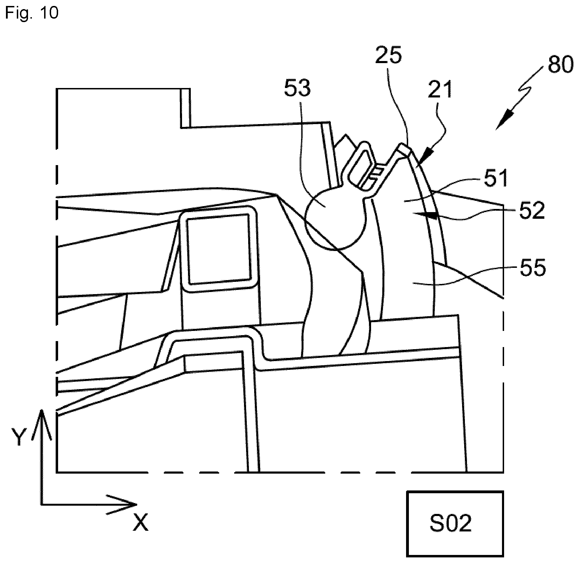

La section S02 (figure 10) correspond à la deuxième portion de transition 25 de la feuillure 21.

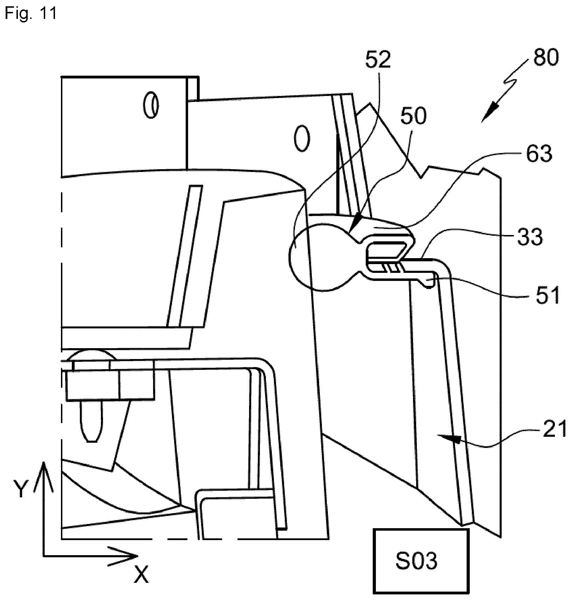

La section S03 (figure 11) correspond à la troisième zone 33 de la feuillure 21 et à la troisième région 63 du joint 50.

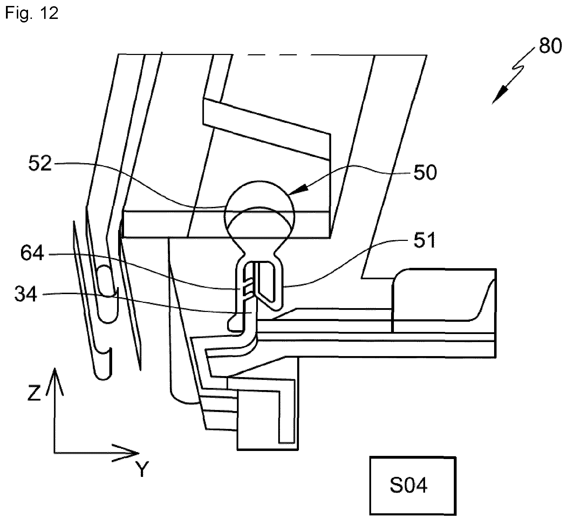

La section S04 (figure 12) correspond à la quatrième zone 34 de la feuillure 21 et à la quatrième région 64 du joint 50. La feuillure 21 est notamment verticale dans la quatrième zone 34.

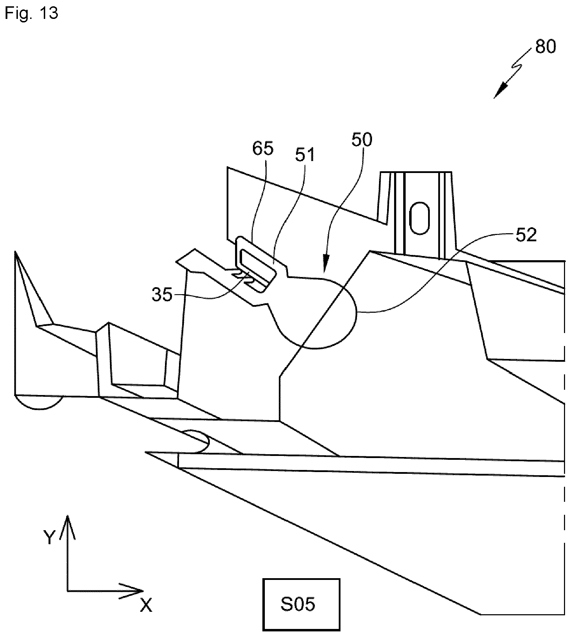

La section S05 (figure 13) correspond à la cinquième zone 35 de la feuillure 21 et à la cinquième région 65 du joint 50.

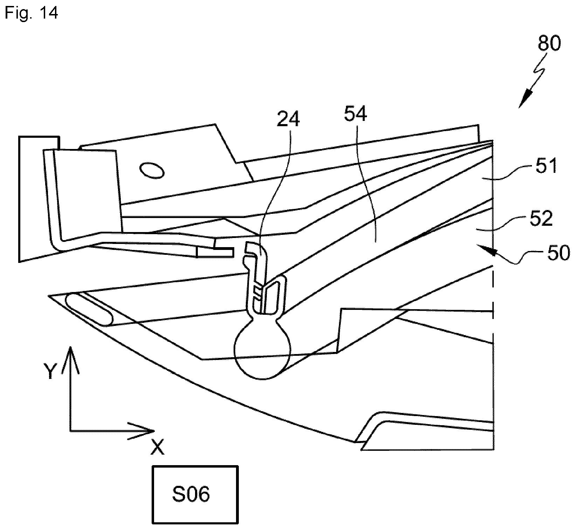

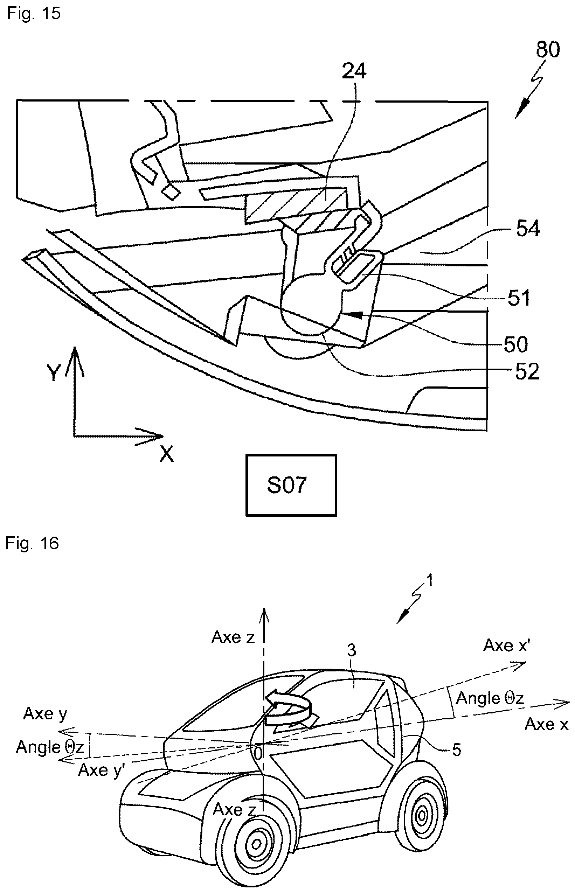

La section S06 (figure 14) et la section S07 (figure 15) correspondent à la première portion de transition 24 de la feuillure 21.

La porte 3 peut être mobile en rotation autour de l'axe transversal y.

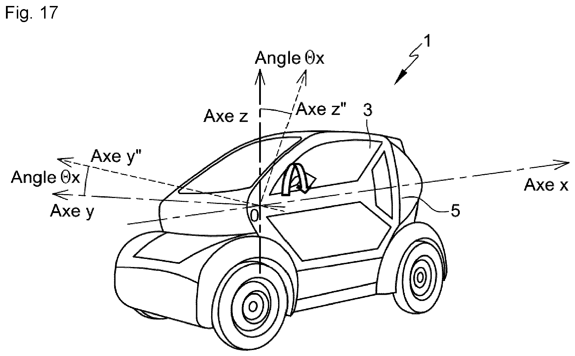

En variante, la porte 3 peut être mobile en rotation autour d'un axe de rotation incliné par rapport audit axe transversal y (figure 16 et figure 17).

La porte 3 peut être mobile en rotation autour d'un axe de rotation y' incliné vers l'avant ou vers l'arrière par rapport à l'axe transversal y (figure 16). L'axe y' forme un angle θz par rapport à l'axe y.

La porte 3 peut être mobile en rotation autour d'un axe de rotation y" incliné vers le bas ou vers le haut par rapport à l'axe transversal y (figure 17). L'axe y" forme un angle θx par rapport à l'axe y.

En variante, l'axe de rotation de la porte 3 peut être déporté par rapport à la porte 3 ou par rapport à l'encadrement de porte 20. Le centre de rotation O de la porte 3 peut être décalé vers l'intérieur de l'habitacle ou vers l'extérieur de l'habitacle selon l'axe transversal y par rapport au plan dans lequel la feuillure 21 s'étend.

Un avantage d'un encadrement de porte du type de celui décrit ci-dessus est lié au fait qu'il permet d'assurer l'étanchéité d'une porte et d'éviter ou limiter les frottements en manœuvres d'ouverture et de fermeture, la porte ayant une cinématique de type élytre pure selon un axe de pivot uniquement, contrairement aux portes en élytre habituellement utilisées ayant une double cinématique (pivotement en z sur quelques degrés puis cinématique en élytre par rotation hélicoïdale permettant le décollement sur le début de la rotation).

Un avantage d'un encadrement de porte du type de celui décrit ci-dessus est lié au fait qu'il permet un échappement de la porte lorsque la porte est ouverte depuis sa position fermée par un mouvement de rotation autour d'un axe de rotation unique, par une simple liaison pivot. Il en résulte qu'un encadrement de porte du type de celui décrit ci-dessus, et un agencement comprenant un encadrement de porte et un joint d'étanchéité, est robuste et présente un cout réduit.

Un avantage d'un encadrement de porte du type de celui décrit ci-dessus réside dans le fait qu'il est compatible avec tous types de joints, standards ou non.

Un avantage d'un encadrement de porte du type de celui décrit ci-dessus réside dans le fait qu'il peut être utilisé dans le cas d'une porte mobile en rotation autour d'un axe de rotation orienté selon un axe transversal, la feuillure s'étendant dans un plan globalement perpendiculaire à un axe transversal, et dans le cas où l'axe de rotation de la porte est incliné par rapport audit axe transversal, vers le bas ou vers le haut, ou vers l'avant ou vers l'arrière.

Un avantage d'un encadrement de porte du type de celui décrit ci-dessus réside dans le fait qu'il peut être utilisé dans le cas d'un joint sur caisse ou dans le cas d'un joint sur porte.

Un avantage d'un encadrement de porte du type de celui décrit ci-dessus réside dans le fait qu'il permet un accès à bord optimisé pour un utilisateur.

Un avantage d'un agencement comprenant un encadrement de porte du type de celui décrit ci-dessus et un joint d'étanchéité réside dans le fait qu'un joint d'étanchéité en une seule pièce peut être utilisé. Il en résulte une ligne d'étanchéité continue et l'absence de chevauchement de joints. Ceci permet d'éviter tout fuite d'eau ou d'air ou de bruit. Ceci permet d'éviter des frottements dus au chevauchement de joints. Les dimensions de la feuillure peuvent être minimisées.

L'avantage de l'invention réside aussi dans le fait que l'encadrement de porte présente une feuillure qui peut être également orientée de façon sensiblement parallèle au dit au moins un plan de côté de caisse dans lequel s'inscrit l'encadrement de porte.

Bien que l'invention ait été décrite ci-dessus dans le cas d'un véhicule automobile, l'invention s'applique à tout véhicule équipé d'au moins une porte en élytre, par exemple dans les domaines de l'habitat ou de l'avionique ou dans le domaine maritime.

## Revendications

1. Encadrement de porte (20) pour un véhicule (1), notamment automobile, comprenant une feuillure (21) annulaire destinée à coopérer avec un joint d'étanchéité (50) annulaire, le joint d'étanchéité (50) étant destiné à former une étanchéité entre la feuillure (21) et une porte (3) lorsque la porte est dans une position fermée, la feuillure (21) s'étendant dans un plan globalement perpendiculaire à un axe transversal (y), **caractérisé en ce que** la feuillure (21) comprend au moins une portion de transition (23), notamment du type d'une portion vrillée, configurée de sorte à permettre un échappement du joint (50) lorsque la porte est ouverte depuis sa position fermée par un mouvement de rotation de la porte autour d'un axe de rotation orienté selon l' axe transversal (y) ou sensiblement selon l'axe transversal.

2. Encadrement de porte selon la revendication 1, **caractérisé en ce que** l'au moins une portion de transition (23) est une vrille en au moins un quart de tour, notamment un demi-tour, de telle sorte que cette portion est d'orientation sensiblement parallèle à l'axe transversal (y).

3. Encadrement de porte selon la revendication 1 ou 2, **caractérisé en ce que** la feuillure (21) comprend au moins une zone (31, 32, 33, 34, 35) configurée de sorte à permettre un agencement du joint (50) en retrait ou en saillie par rapport à la feuillure.

4. Encadrement de porte selon l'une des revendications précédentes, **caractérisé en ce que** la feuillure (21) comprend :
- une première zone (31) configurée de sorte à permettre un agencement d'une première région (61) correspondante du joint selon une orientation perpendiculaire à une direction ayant une composante verticale vers le haut et une composante longitudinale vers l'avant ; et
- une deuxième zone (32) configurée de sorte à permettre un agencement d'une deuxième région (62) correspondante du joint selon une orientation perpendiculaire à une direction longitudinale et vers l'avant ; et
- une troisième zone (33) configurée de sorte à permettre un agencement d'une troisième région (63) correspondante du joint selon une orientation perpendiculaire à une direction ayant une composante longitudinale vers l'avant et une composante verticale vers le haut ; et
- une quatrième zone (34) configurée de sorte à permettre un agencement d'une quatrième région (64) correspondante du joint selon une orientation perpendiculaire à une direction verticale et vers le haut ; et
- une cinquième zone (35) configurée de sorte à permettre un agencement d'une cinquième région (65) correspondante du joint selon une orientation perpendiculaire à une direction ayant une composante longitudinale vers l'arrière et une composante verticale vers le haut.

5. Encadrement de porte selon la revendication 4, **caractérisé :**
- **en ce qu'**une première portion de transition (24) de la feuillure (21) s'étend entre la cinquième zone (35) et la première zone (31) de la feuillure (21), notamment via un basculement selon l'axe transversal (y), de telle sorte que cette portion est d'orientation sensiblement parallèle à l'axe transversal (y), et/ou
- **en ce qu'**une deuxième portion de transition (25) de la feuillure (21) s'étend entre la première zone (31) et la deuxième zone (32) de la feuillure (21), notamment via un basculement selon l'axe transversal (y), de telle sorte que cette portion est d'orientation sensiblement parallèle à l'axe transversal (y).

6. Encadrement de porte selon la revendication 5, **caractérisé en ce que** la première portion de transition (24) est située à proximité dudit axe transversal (y) et/ou **en ce que** la deuxième portion de transition (25) est destinée à coopérer avec un coin supérieur arrière d'une porte (3), ledit axe transversal (y) étant situé à l'avant de la feuillure (21).

7. Agencement (80) comprenant un encadrement de porte (20) selon l'une des revendications précédentes et un joint d'étanchéité (50), le joint d'étanchéité (50) étant par exemple monté sur la feuillure (21), notamment chaussé sur la feuillure (21), et/ou le joint d'étanchéité (50) étant par exemple fixé à la feuillure (21) par au moins un clip de fixation.

8. Ensemble comprenant un agencement (80) selon la revendication 7 et une porte (3) mobile en rotation autour dudit axe transversal (y).

9. Ensemble comprenant un agencement (80) selon la revendication 7 et une porte (3) mobile en rotation autour d'un axe de rotation, l'axe de rotation de la porte étant incliné par rapport audit axe transversal (y) et/ou l'axe de rotation de la porte étant déporté par rapport à la porte ou par rapport à l'encadrement de porte (20).

10. Véhicule (1), notamment véhicule automobile, comprenant un encadrement de porte (20) selon l'une des revendications 1 à 6 et/ou un agencement (80) selon la revendication 7 et/ou un ensemble selon la revendication 8 ou 9.

## Patentansprüche

1. Türrahmen (20) für ein Fahrzeug (1), insbesondere ein Kraftfahrzeug, umfassend einen ringförmigen Falz (21), der dazu bestimmt ist, mit einer ringförmigen Dichtung (50) zusammenzuwirken, wobei die Dichtung (50) dazu bestimmt ist, eine Abdichtung zwischen dem Falz (21) und einer Tür (3) zu bilden, wenn die Tür in einer geschlossenen Stellung ist, wobei sich der Falz (21) in einer insgesamt senkrecht zu einer Querachse (y) verlaufenden Ebene erstreckt, **dadurch gekennzeichnet ist, dass** der Falz (21) mindestens einen Übergangsabschnitt (23) umfasst, insbesondere vom Typ eines verwundenen Abschnitts, der so ausgestaltet ist, dass er ein Entweichen der Dichtung (50) ermöglicht, wenn die Tür aus ihrer geschlossenen Stellung heraus durch eine Drehbewegung der Tür um eine entlang der Querachse (y) oder im Wesentlichen entlang der Querachse ausgerichtete Drehachse geöffnet wird.

2. Türrahmen nach Anspruch 1, **dadurch gekennzeichnet, dass** der mindestens eine Übergangsabschnitt (23) eine Verwindung um mindestens eine Viertelumdrehung, insbesondere eine halbe Umdrehung, ist, so dass dieser Abschnitt im Wesentlichen parallel zu der Querachse (Y) ausgerichtet ist.

3. Türrahmen nach Anspruch 1 oder 2, **dadurch gekennzeichnet, dass** der Falz (21) mindestens einen Bereich (31, 32, 33, 34, 35) umfasst, der so ausgestaltet ist, dass er eine in Bezug auf den Falz zurückversetzte oder vorspringende Anordnung der Dichtung (50) ermöglicht.

4. Türrahmen nach einem der vorhergehenden Ansprüche, **gekennzeichnet dadurch, dass** der Falz (21) umfasst:
- einen ersten Bereich (31), der so ausgestaltet ist, dass er eine Anordnung einer ersten entsprechenden Region (61) der Dichtung entlang einer Ausrichtung ermöglicht, die senkrecht zu einer Richtung verläuft, die eine vertikale Komponente nach oben und einer Längskomponente nach vorn aufweist; und
- einen zweiten Bereich (32), der so ausgestaltet ist, dass er eine Anordnung einer zweiten entsprechenden Region (62) der Dichtung entlang einer Ausrichtung ermöglicht, die senkrecht zu einer Längsrichtung nach vorn verläuft; und
- einen dritten Bereich (33), der so ausgestaltet ist, dass er eine Anordnung einer dritten entsprechenden Region (63) der Dichtung entlang einer Ausrichtung ermöglicht, die senkrecht zu einer Richtung verläuft, die eine Längskomponente nach vorn und eine vertikale Komponente nach oben aufweist; und
- einen vierten Bereich (34), der so ausgestaltet ist, dass er eine Anordnung einer vierten entsprechenden Region (64) der Dichtung entlang einer Ausrichtung ermöglicht, die senkrecht zu einer vertikalen Richtung und nach oben verläuft; und
- einen fünften Bereich (35), der so ausgestaltet ist, dass er eine Anordnung einer fünften entsprechenden Region (65) der Dichtung entlang einer Ausrichtung ermöglicht, die senkrecht zu einer Richtung verläuft, die eine Längskomponente nach hinten und eine vertikale Komponente nach oben aufweist.

5. Türrahmen nach Anspruch 4, **dadurch gekennzeichnet:**
- **dass** sich ein erster Übergangsabschnitt (24) des Falzes (21) zwischen dem fünften Bereich (35) und dem ersten Bereich (31) des Falzes (21) erstreckt, insbesondere durch ein Kippen entlang der Querachse (y), so dass dieser Abschnitt im Wesentlichen parallel zu der Querachse (y) ausgerichtet ist, und/oder
- **dass** sich ein zweiter Übergangsabschnitt (25) des Falzes (21) zwischen dem ersten Bereich (31) und dem zweiten Bereich (32) des Falzes (21) erstreckt, insbesondere durch ein Kippen entlang der Querachse (y), so dass dieser Abschnitt im Wesentlichen parallel zu der Querachse (y) ausgerichtet ist.

6. Türrahmen nach Anspruch 5, **dadurch gekennzeichnet, dass** der erste Übergangsabschnitt (24) in der Nähe der Querachse (y) gelegen ist und/oder dass der zweite Übergangsabschnitt (25) dazu bestimmt ist, mit einer oberen hinteren Ecke einer Tür (3) zusammenzuwirken, wobei die Querachse (y) an der Vorderseite des Falzes (21) gelegen ist.

7. Anordnung (80), umfassend einen Türrahmen (20) nach einem der vorhergehenden Ansprüche und eine Dichtung (50), wobei die Dichtung (50) beispielsweise an dem Falz (21) montiert ist, insbesondere auf den Falz (21) aufgesetzt ist, und/oder wobei die Dichtung (50) beispielsweise durch mindestens einen Befestigungsclip an dem Falz (21) befestigt ist.

8. Baugruppe, umfassend eine Anordnung (80) nach Anspruch 7 und eine um die Querachse (y) drehbewegliche Tür (3).

9. Baugruppe, umfassend eine Anordnung (80) nach Anspruch 7 und eine um eine Drehachse drehbewegliche Tür (3), wobei die Drehachse der Tür in Bezug auf die Querachse (y) geneigt ist und/oder wobei die Drehachse der Tür in Bezug auf die Tür oder in Bezug auf den Türrahmen (20) versetzt ist.

10. Fahrzeug (1), insbesondere Kraftfahrzeug, umfassend einen Türrahmen (20) nach einem der Ansprüche 1 bis 6 und/oder eine Anordnung (80) nach Anspruch 7 und/oder eine Baugruppe nach Anspruch 8 oder 9.

## Claims

1. Door frame (20) for a vehicle (1), in particular a motor vehicle, comprising an annular rebate (21) intended to interact with an annular seal (50), the seal (50) being intended to form a seal between the rebate (21) and a door (3) when the door is in a closed position, the rebate (21) extending in a plane generally perpendicular to a transverse axis (y), **characterized in that** the rebate (21) comprises at least one transition portion (23), in particular of the twisted portion type, configured so as to allow the seal (50) to be released when the door is opened from its closed position by a rotating movement of the door about an axis of rotation oriented along the transverse axis (y) or substantially along the transverse axis.

2. Door frame according to Claim 1, **characterized in that** the at least one transition portion (23) is a twist of at least a quarter turn, in particular a half turn, so that this portion is oriented substantially parallel to the transverse axis (y).

3. Door frame according to Claim 1 or 2, **characterized in that** the rebate (21) comprises at least one zone (31, 32, 33, 34, 35) configured so as to allow an arrangement of the seal (50) set back from or protruding from the rebate.

4. Door frame according to one of the preceding claims, **characterized in that** the rebate (21) comprises:
- a first zone (31) configured so as to allow the arrangement of a corresponding first region (61) of the seal in an orientation perpendicular to a direction having an upward vertical component and a forward longitudinal component; and
- a second zone (32) configured so as to allow the arrangement of a corresponding second region (62) of the seal in an orientation perpendicular to a longitudinal direction and toward the front; and
- a third zone (33) configured so as to allow the arrangement of a corresponding third region (63) of the seal in an orientation perpendicular to a direction having a forward longitudinal component and an upward vertical component; and
- a fourth zone (34) configured so as to allow the arrangement of a corresponding fourth region (64) of the seal in an orientation perpendicular to a vertical direction and toward the top; and
- a fifth zone (35) configured so as to allow the arrangement of a corresponding fifth region (65) of the seal in an orientation perpendicular to a direction having a rearward longitudinal component and an upward vertical component.

5. Door frame according to Claim 4, **characterized in that**:
- a first transition portion (24) of the rebate (21) extends between the fifth zone (35) and the first zone (31) of the rebate (21), in particular by means of a tilting along the transverse axis (y), so that this portion is oriented substantially parallel to the transverse axis (y), and/or
- a second transition portion (25) of the rebate (21) extends between the first zone (31) and the second zone (32) of the rebate (21), in particular by means of a tilting along the transverse axis (y), so that this portion is oriented substantially parallel to the transverse axis (y).

6. Door frame according to Claim 5, **characterized in that** the first transition portion (24) is situated near said transverse axis (y) and/or the second transition portion (25) is intended to interact with a rear upper corner of a door (3), said transverse axis (y) being situated at the front of the rebate (21).

7. Arrangement (80) comprising a door frame (20) according to one of the preceding claims and a seal (50), the seal (50) being mounted on the rebate (21) for example, in particular fitted onto the rebate (21), and/or the seal (50) being fastened to the rebate (21) for example by at least one fastening clip.

8. Assembly comprising an arrangement (80) according to Claim 7 and a door (3) rotatable about said transverse axis (y).

9. Assembly comprising an arrangement (80) according to Claim 7 and a door (3) rotatable about an axis of rotation, the axis of rotation of the door being inclined relative to said transverse axis (y) and/or the axis of rotation of the door being offset relative to the door or relative to the door frame (20).

10. Vehicle (1), in particular a motor vehicle, comprising a door frame (20) according to one of Claims 1 to 6, and/or an arrangement (80) according to Claim 7, and/or an assembly according to Claim 8 or 9.
